# EUROPEAN PATENT SPECIFICATION

(11) **EP 3 311 980 B1**
(45) Date of publication and mention of the grant of the patent: **24.02.2021**
(21) Application number: 17196623.7
(22) Date of filing: 16.10.2017
(51) Int. Cl.: B29C 51/30, B29C 51/32, B29C 51/26

(54) **METHOD FOR MAKING A CONTAINMENT ELEMENT AND APPARATUS FOR HEAT-SEALING A COVERING FILM TO AN ANNULAR BAND OF A CONTAINMENT ELEMENT**
VERFAHREN ZUR HERSTELLUNG EINES AUFNAHMEELEMENTS UND VORRICHTUNG ZUM HEISSSIEGELN EINER DECKFOLIE AUF EINEM RINGFÖRMIGEN BAND EINES AUFNAHMEELEMENTS
PROCÉDÉ DE FABRICATION D'UN ÉLÉMENT DE CONFINEMENT ET APPAREIL DE THERMOSCELLAGE D'UN FILM DE RECOUVREMENT SUR UNE BANDE ANNULAIRE D'UN ÉLÉMENT DE CONFINEMENT

(30) Priority: 19.10.2016 IT 201600105165; 14.04.2017 IT 201700042066
(43) Date of publication of application: 25.04.2018
(73) Proprietor: Mondini S.r.l., 25122 Brescia (IT)
(72) Inventor: Mondini, Giovanni, 25033 Cologne (Brescia) (IT)
(74) Representative: Ponchiroli, Simone

(56) References cited:
- FR-A1- 2 867 413
- GB-A- 2 501 455
- JP-A- S58 217 318
- US-A- 3 041 669
- US-A- 3 995 763

## Description

This invention relates to a method for making a containment element, as well as an apparatus for heat-sealing a covering film to an annular band of a containment element.

Particularly in the food packaging sector, containment elements are used, which are obtained by thermoforming (usually with a vacuum), and have a basin or tray shape. They are closed at the top with a heat-sealable plastic film.

In general, containment elements therefore have a bottom wall and a lateral wall that extends upwards from the bottom wall. Extending outwards from the upper part of the lateral wall there is an annular band that forms an outline of the upper opening of the container, and to which the plastic film for closing the container is sealed.

At present, containment elements of this type may be divided into two types depending on the shape of the annular band.

In fact, a first type of containment elements has a flat annular band extending only in a horizontal plane.

In contrast, a second type of containment elements has an annular band that is constituted of a shaped flange, and on whose upper surface it is possible to identify at least two annular portions that are concentric and not coplanar. In the first type of containment elements, the presence of a flat flange constitutes an element of mechanical weakness, that makes them unsuitable for uses that require some sturdiness.

In contrast, the containment elements of the second type, thanks to the presence of the shaped flange, their other characteristics being equal, can guarantee a mechanical sturdiness considerably greater than a containment element with a flat flange.

In many contexts, such as for example in the case of companies with small-scale production of many different products, it is possible that there are different packaging lines available, each intended for packaging the products in a different type of container, but only one container thermoforming line. However, in these cases, the type of containment element produced by the thermoforming line is always the same for the subsequent packaging lines, despite this not necessarily being the best choice. In fact, in many cases, for the companies it would absolutely be preferable to be able to have available both types of containers, but the costs linked to purchasing and installing a double thermoforming line prevent it.

A first example of thermoforming apparatus provided with a single station for producing containers of the second type with a shaped flange is disclosed in FR 2867413. A second example of thermoforming apparatus, which differs from the first one for using a male mould, is disclosed in GB 2501455. A third example of thermoforming apparatus, which differs from the first one for using a single piece mould instead of a mould with movable parts, is disclosed in JP S58-217318.

In this context the technical purpose which forms the basis of this invention is to provide a method for making a containment element which overcomes the above-mentioned disadvantages.

In particular, the technical purpose of this invention is to provide a method for making a containment element that guarantees a high degree of flexibility of choice in terms of the type of containment element to be made.

The technical purpose of this invention is also to provide an apparatus that allows easy implementation of that method.

The technical purpose specified and the aims indicated are substantially achieved by a making a containment element as described in the appended claims.

Further features and the advantages of this invention are more apparent in the detailed description, with reference to the accompanying drawings which illustrate several preferred, non-limiting embodiments of a method for making a containment element, in which:

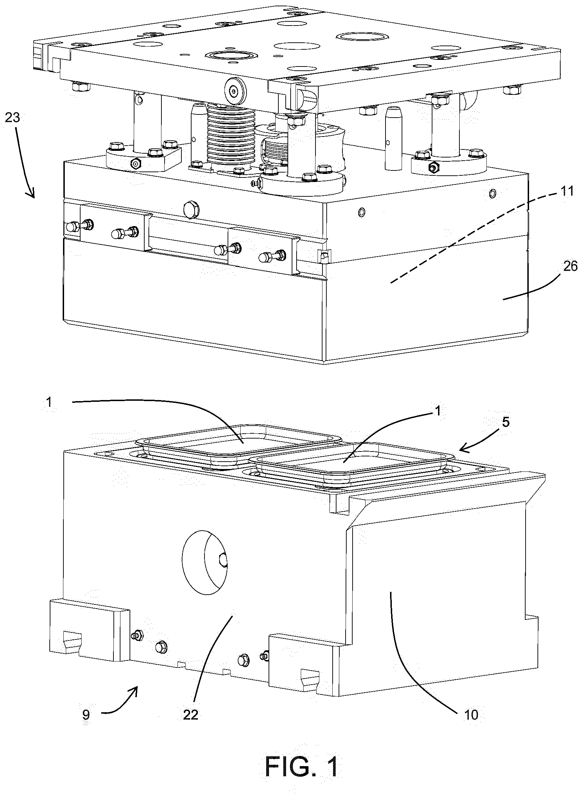

- Figure 1 is an axonometric three-quarter view of a part of an apparatus able to implement some steps of the method according to this invention, in an operating position corresponding to the end of implementation of the method;

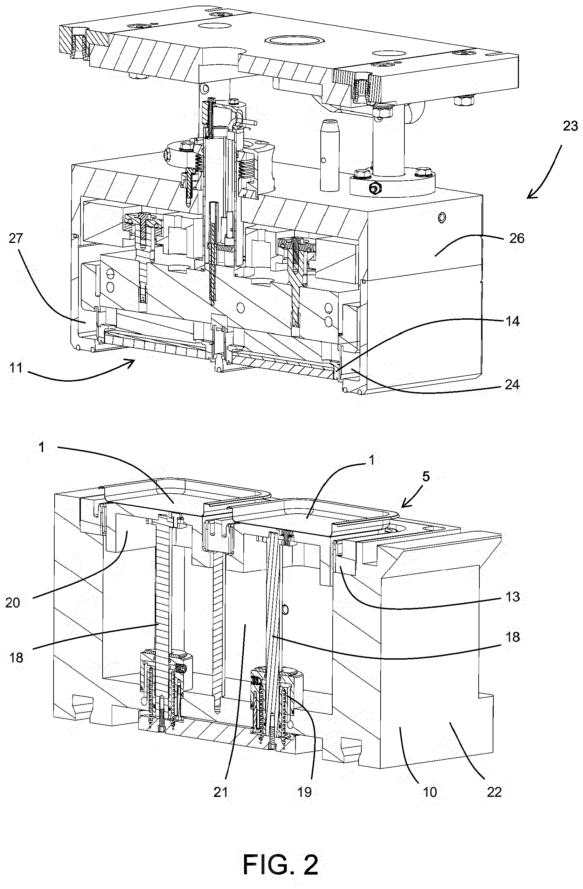

- Figure 2 is a vertical section of the part of the apparatus of Figure 1;
- Figures 3 to 9 show the apparatus of Figure 2 in six successive steps, during its use in accordance with a preferred embodiment of the method according to this invention;
- Figures 10 to 16 are enlarged views of the most significant part of each of Figures 3 to 9;
- Figures 17 and 19 show, in two different reciprocal positions, several details of an alternative embodiment of this invention (without the covering film); and
- Figure 18 shows a further possible alternative embodiment relative to that illustrated in Figures 17 and 19 (without the covering film).

The following is a description first of the method according to this invention and then of a possible apparatus for implementing it. What is described below, respectively with reference to the method or to the apparatus, shall be understood to also be valid respectively for the apparatus or the method. The innovative idea which forms the basis of this invention is that of making the containment elements 1 with a two-step process, in which if necessary the two steps may even be performed at different times.

In a first step, thermoforming is used to make a containment element 1 that is the same as the containment elements 1 of the first known type described above, that is to say, equipped with a flat annular band 2 that extends exclusively in a horizontal plane.

That containment element 1 may then be used as it is for applications requiring the use of a containment element 1 with a flat annular band 2, whilst it can be subjected to the second part of the method disclosed if use of a container in which the annular band 2 must be a shaped flange is required. In this case, in fact, the container is subsequently subjected to a hot bending process localised at the annular band 2. That hot bending step may be implemented in any context necessary, and in particular either as an independent step on containers previously thermoformed even in another place, or as an optional additional step in a thermoforming plant, or, as in the preferred embodiment, simultaneously with sealing of the containment element 1 with a closing film.

Having said that, it is possible to move on to the detailed description of the most general embodiment of the method according to this invention. That method is intended for making a containment element 1 that has a bottom wall 3, a lateral wall 4 connected at the bottom to the bottom wall 3 and a shaped perimetric flange 5 that extends outwards from an upper part of the lateral wall 4.

The method comprises first an operating step of taking a flat sheet (not illustrated) constituted of a thermoformable material, followed by a thermoforming operating step in which the flat sheet is thermoformed and the bottom wall 3, the lateral wall 4 and an annular band 2 that projects outwards from the upper part of the lateral wall 4 are created. Advantageously, this thermoforming operation is of the vacuum type, but other ways may be freely used.

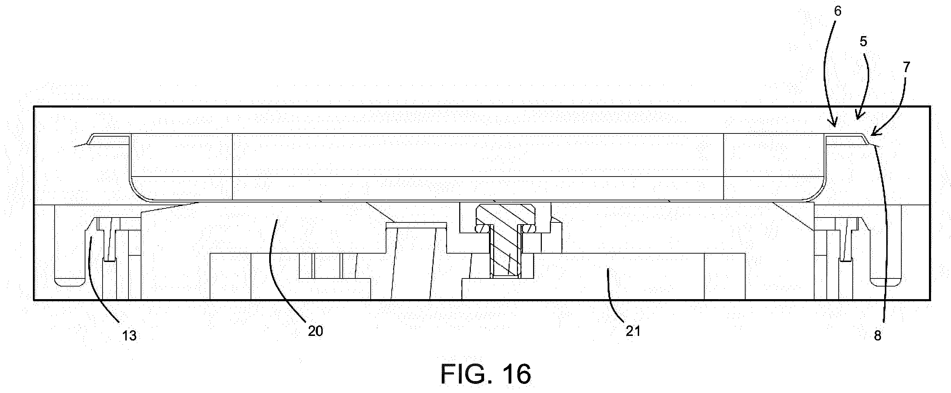

Then, the method comprises a hot bending operating step, during which the annular band 2 is bent and thereby divided into a first annular portion 6 and a second annular portion 7 that are concentric, adjacent and not coplanar. Depending on the embodiments, in vertical section the first annular portion 6 and the second annular portion 7 may be straight (as in Figure 16) or curved. Furthermore, it may even be the case that during the hot bending step the annular band 2 is bent in such a way that it is divided into more than two concentric annular portions.

In any case, after the hot bending the annular band 2 constitutes the shaped perimetric flange.

As already indicated, in a particularly preferred but not exclusive embodiment of the method according to this invention, the hot bending step is performed at the same time as sealing of the containment element 1, that is to say, either simultaneously with it, or immediately after it or immediately before it.

In this case, after the thermoforming step, the method also comprises first an operating step of positioning a covering film 8 above the containment element 1, in such a way that a part of the covering film 8 rests on the annular band 2, at least for part of the outward extent of the annular band 2, relative to the upper part of the lateral wall 4. This may be achieved by spreading out a web of covering film 8 above the containment element 1 and cutting the web to form a closing element for the container after sealing (as in the case illustrated in the accompanying figures), or by preparing individual sheets of covering film 8 of the correct size and applying them to the containment element 1.

In order to combine sealing and the hot bending step, advantageously the later comprises an initial step of heating the annular band 2 of the containment element 1 and the part of the covering film 8 positioned on the annular band 2, a step of heat-sealing the covering film 8 to the annular band 2, and a step of mechanical hot bending of the annular band 2 (the latter two both performed after the covering film 8 and the annular band 2 have been heated). In general, the hot bending step may be performed either after the heat-sealing step, or simultaneously with the heat-sealing step or before the heat-sealing step, depending on requirements. However, in the preferred applications, the hot bending step is performed during the heat-sealing step, but it also begins a predetermined time after the moment when the heat-sealing step begins.

If the covering film 8 has not been previously cut into sheets of the correct size, the method may then comprise, after the thermoforming and heat-sealing steps, also a step of cutting the covering film 8 along a profile that surrounds the annular band 2.

Although the step of cutting the covering film 8 may be performed before or after the hot bending step, advantageously, it is usually performed before the hot bending step.

In its preferred embodiment, in which the hot bending step occurs at the same time as the sealing step for sealing the containment element 1, the method described above is generally part of a method for packaging products, in particular foodstuffs.

That packaging method, as well as comprising the operating step of making a containment element 1 according to the method described above, comprises a step of positioning the product to be packaged in the containment element 1, a step that is performed after the thermoforming operating step and before the hot bending operating step (which takes place at the same time as the sealing step).

If necessary, the packaging method may also comprise an operating step of creating a modified atmosphere in the containment element 1, a step that will be performed after the step of inserting the product in the containment element 1 and before the hot bending operating step.

In contrast, if the method according to this invention does not comprise the combination of the hot bending step with a step of sealing the containment element 1, the hot bending step advantageously comprises an initial step of heating only the annular band 2 of the containment element 1 followed by mechanical hot bending.

In some embodiments, it is even possible to use a single flat sheet of thermoformable material for thermoforming, during the thermoforming step, a plurality of containment elements 1 that are attached to each other at mutual outer edges of the annular bands 2. In this case, the method may then comprise a further step of separating the containment elements which may advantageously be performed by making a cut at the joined outer edges. If the method already comprises the step of cutting the covering film, the separating step may advantageously be performed at the same time as it. In contrast, if the covering film is not present or the method does not comprise its cutting, the separating step may be performed by means of an independent cutting step.

Moving on to the apparatus according to this invention, in a first preferred embodiment, it may be defined as an apparatus for heat-sealing a covering film 8 to an annular band 2 of a containment element 1. That apparatus is intended to allow simultaneous implementation of the operating steps of sealing of the containment element 1 and hot bending of the flat annular band 2 of a containment element 1 previously prepared. According to a second preferred embodiment, the apparatus may in contrast constitute a hot bending station (with optional activation depending on requirements) in a thermoforming machine. In both cases, the apparatus is therefore intended to perform only the final steps of the method, those that follow the thermoforming step, but in the latter case, the thermoforming machine of which the apparatus is a part is, overall, capable of implementing the entire method.

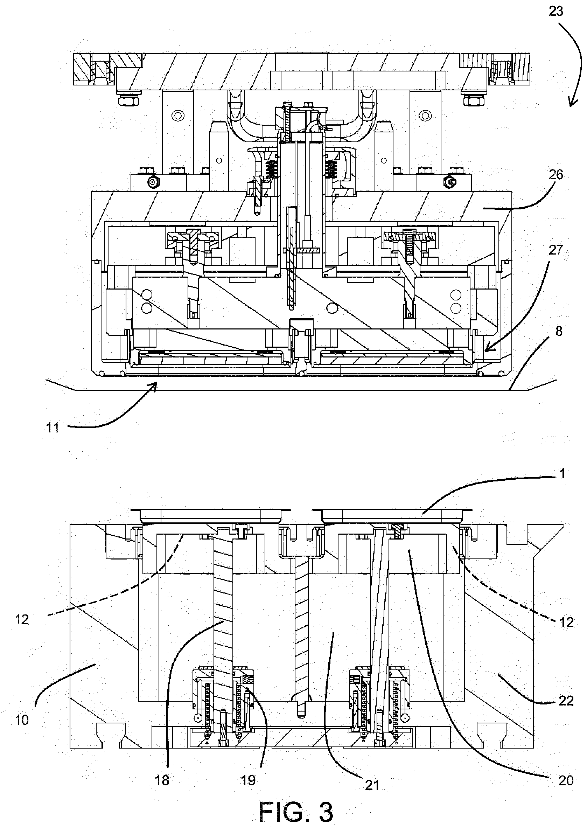

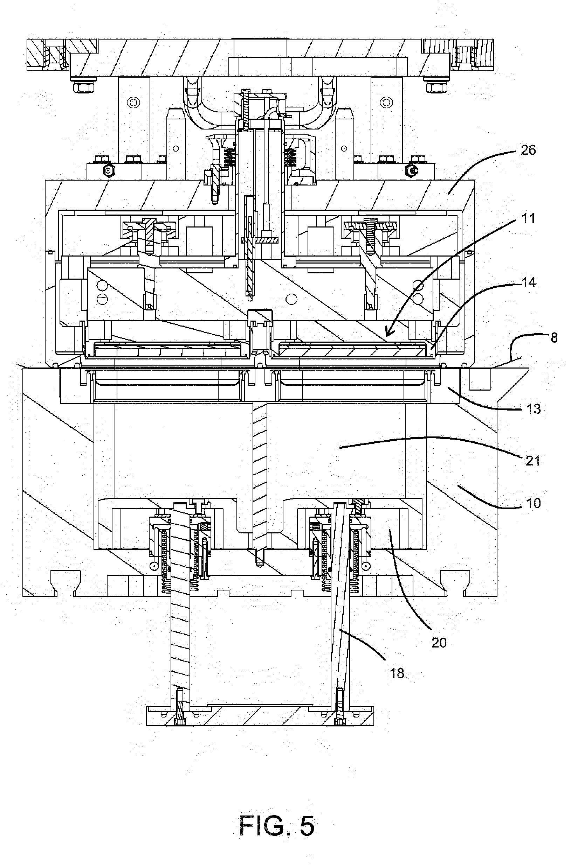

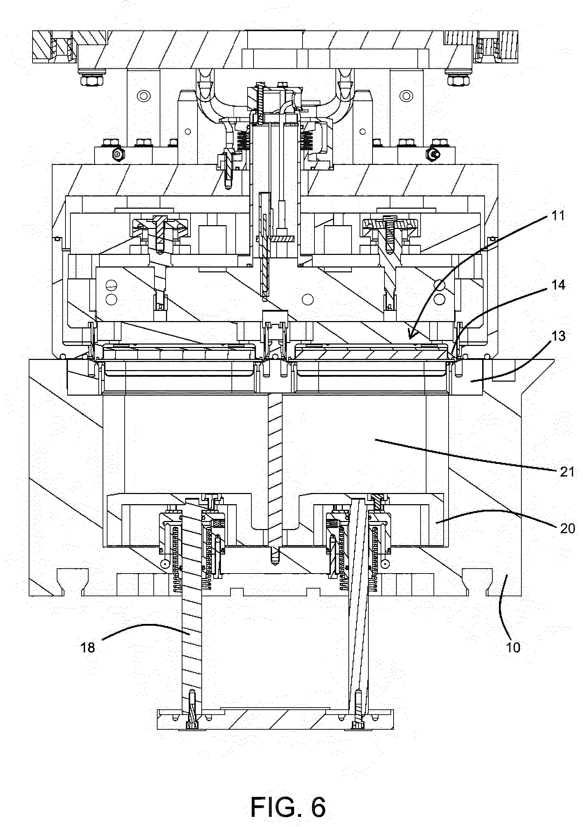

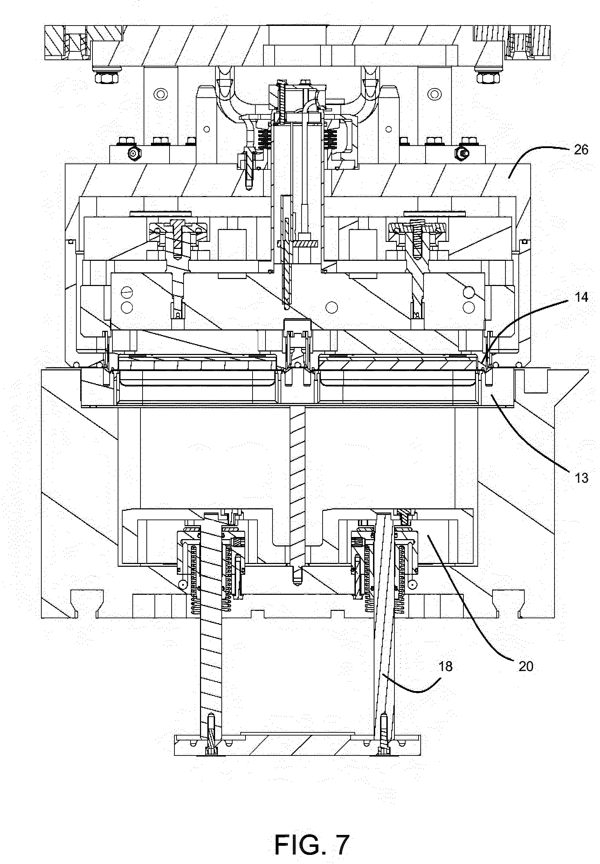

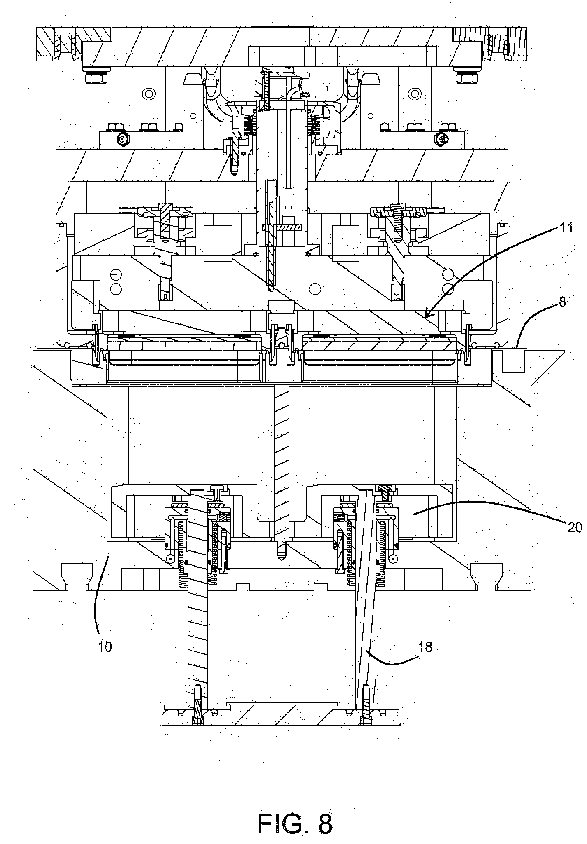

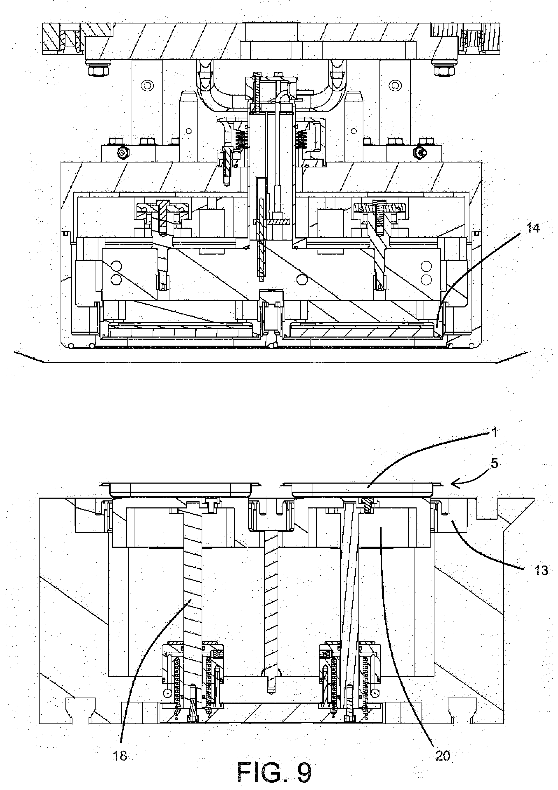

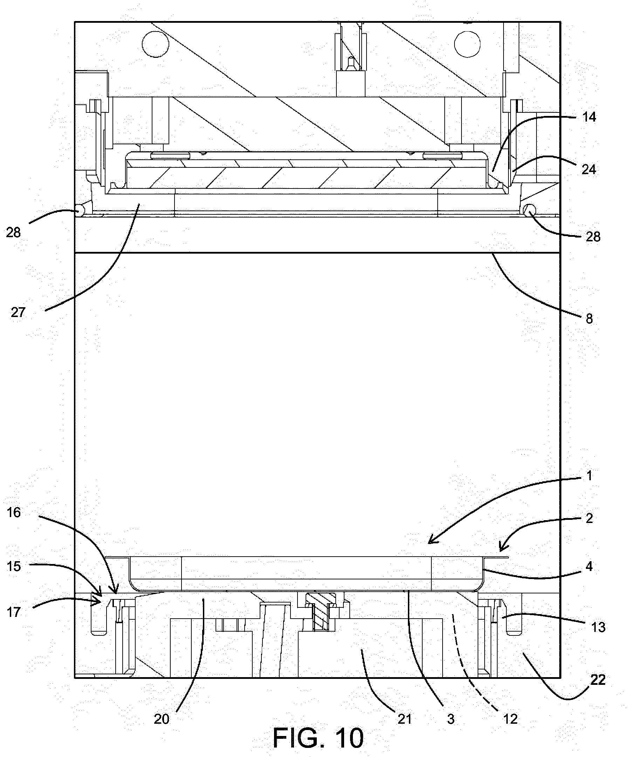

As illustrated in the accompanying figures, the core 9 of that apparatus comprises two main parts, a supporting base 10 (at the bottom in the accompanying figures) and a closing device 11 (at the top in the accompanying figures). The part of the apparatus illustrated in the accompanying figures is intended, intended, in particular, for simultaneously working on two containment elements 1, but in other embodiments there may be any number of containment elements 1. Since the operations on the two containment elements 1 are exactly the same, whilst Figures 3 to 9 show the core 9 of the apparatus as a whole, Figures 10 to 16 are enlarged views exclusively of the detail of what gradually occurs on a single containment element 1.

The supporting base 10 in turn comprises a housing seat 12 suitable for in use housing the bottom wall 3 and the lateral wall 4 of a containment element 1, and a first half-mould 13 that has an annular shape and that surrounds the housing seat 12. The first half-mould 13 is suitable for in use supporting the annular band 2 of a containment element 1 whose bottom wall 3 and lateral wall 4 are inserted in the housing seat 12.

The closing device 11 is positioned above the supporting base 10 and comprises at least a second half-mould 14 that has an annular shape and that is shaped to match the first half-mould 13, so that it can be coupled to the first half-mould and together with the first half-mould 13 form a mould with annular extension that is shaped liked the first annular portion 6 and the second annular portion 7 that are to be obtained in the annular band 2. In other words, at least one of either the first half-mould 13 or the second half-mould 14 (the first half-mould 13 in the accompanying figures - Figure 10) has a moulding surface 15 that comprises at least a first annular zone 16 that in the operating position surrounds the housing seat 12 and a second annular zone 17 concentric with and adjacent to the first annular zone 16, the first annular zone 16 and the second annular zone 17 not being coplanar (the other half-mould - the second half-mould 14 in the accompanying figures - in contrast is at least partly shaped to match it).

At least one of either the supporting base 10 or the closing device 11 is movable relative to the other, between a home position in which the two are at a distance from one another, and an operating position in which the first half-mould 13 and the second half-mould 14 are coupled and can define the mould with annular extension suitable for in use clamping the annular band 2. In the embodiment illustrated, it is the supporting base 10 that moves the most and is slidably mounted on a plurality of fixed guiding columns 18, on which it slides thanks to suitable slides 19 mounted in a gastight way. However, the final part of the mutual movement is obtained by a movement of the closing device 11 as described in more detail below.

However, there may be various embodiments as regards the structure of the two half-moulds 13, 14. In particular, as illustrated for example in Figures 10 to 16, both of the half-moulds 13, 14 may be rigid.

Alternatively, at least one of them may also comprise a first body 29 and a second body 30 that are annular and concentric, and the second body 30 may be telescopically movable relative to the first body 29, between a non-operating position and an operating position. When the second body 30 is in the operating position, the first half-mould 13 and the second half-mould 14 are couplable and can constitute the annular mould. In contrast, when the second body 30 is in the non-operating position, the first half-mould 13 and the second half-mould 14 cannot fully constitute the annular mould; in particular, if the first half-mould 13 and the second half-mould 14 are coupled, the mould that is obtained from them is not able to define at least one of either the first annular portion 6 or the second annular portion 7.

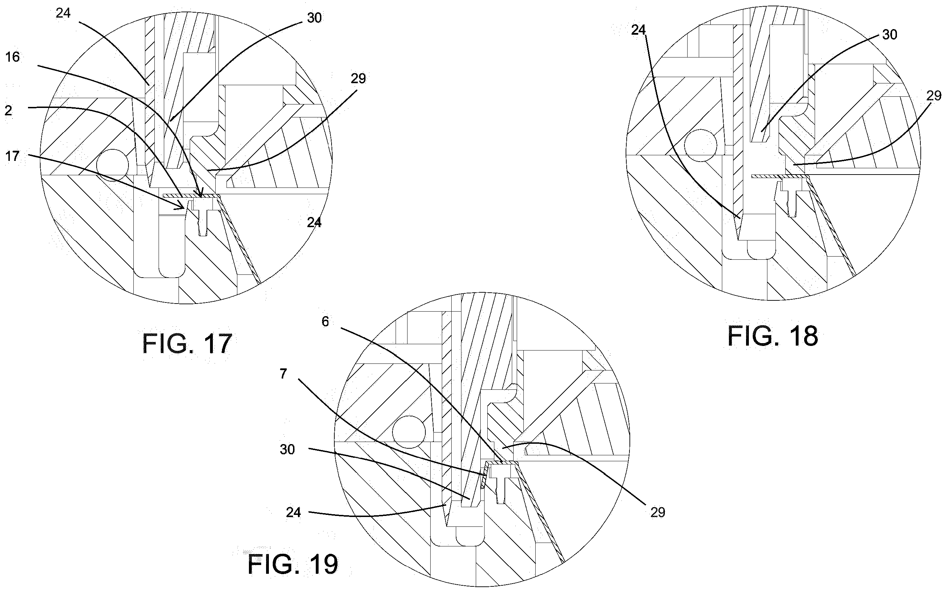

In the embodiments illustrated in Figures 17 to 19, the first body 29 and the second body 30 are part of the second half-mould 14. The first body 29 is mounted on the inside relative to the second body 30 and constitutes the part of the second half-mould 14 intended to interact with the first annular portion 6 and to perform sealing of the covering film 8, whilst the second body 30 is retracted relative to the resting surface defined by the first body 29 when it is in the non-operating position, and projects relative to it when it is in the operating position. Only in this latter position can the second body 30 interact with the first half-mould 13 for hot bending the second annular portion 7. In use, it may advantageously be the case that at the moment of closing of the annular mould the second body 30 is in the non-operating position and in this way, initially, only sealing of the covering film 8 is performed (Figure 17). Only after a predetermined time is the second body 30 brought into the operating position for hot bending the second annular portion 7 (Figure 19).

The supporting base 10 and the closing device 11 can be used on their own for implementing the second hot bending step independently of any subsequent step of sealing of the containment elements 1. Therefore, they are present on their own when the apparatus is part of a thermoforming machine. However, when the hot bending step has to be combined with the sealing step, the apparatus advantageously also comprises a retaining device that is operatively associated with the supporting base 10 and with the closing device 11 and that is suitable for in use retaining a covering film 8 interposed between the first half-mould 13 and the second half-mould 14. Since retaining devices of this type are in themselves known in normal sealing machines, they are not described in further detail herein, nor illustrated in the accompanying figures. The figures show a case in which a web of covering film 8 is used which is gradually unwound so that it can be retained by the retaining device in such a way that it is interposed between the supporting base 10 and the closing device 11.

In some embodiments, the supporting base 10 advantageously also comprises an insertion and extraction element 20 associated with the housing seat 12 for facilitating automatic insertion and extraction of the containment elements 1. At least one of either the housing seat 12 or the insertion and extraction element 20 is in fact movable relative to the other between an engaged position, in which the insertion and extraction element 20 prevents the insertion of a containment element 1 in the housing seat 12, and a disengaged position, in which the insertion and extraction element 20 allows the insertion of a containment element 1 in the housing seat 12. In the engaged position, a containment element 1 may advantageously be positioned at the housing seat 12 and extracted from the apparatus by means of a simple movement in a horizontal plane. In the embodiment illustrated, each insertion and extraction element 20 is fixed to the upper part of a guiding column 18. When the supporting base 10 and the closing device 11 are in the home position, the insertion and extraction element 20 projects slightly upwards relative to the housing seat 12 (see Figure 10). In contrast, when the supporting base 10 moves towards the closing device 11, the insertion and extraction element 20 is inserted in a first half-chamber 21 made in a first part 22 of a containment body 23 described in more detail below; the first annular half-mould 13 is fixed to the first part 22 of the containment body 23.

According to this invention, the supporting base 10 and/or the closing device 11 also comprises one or more heating elements (not illustrated) for heating the first half-mould 13 and/or the second half-mould 14, for in use heating the annular band 2 and any covering film 8 placed on it. Advantageously, the heating elements are of the resistive type and are in themselves of the known type. Therefore, they are not described in detail). However, in the embodiment illustrated in the accompanying figures, the heating elements are only associated with the closing device 11.

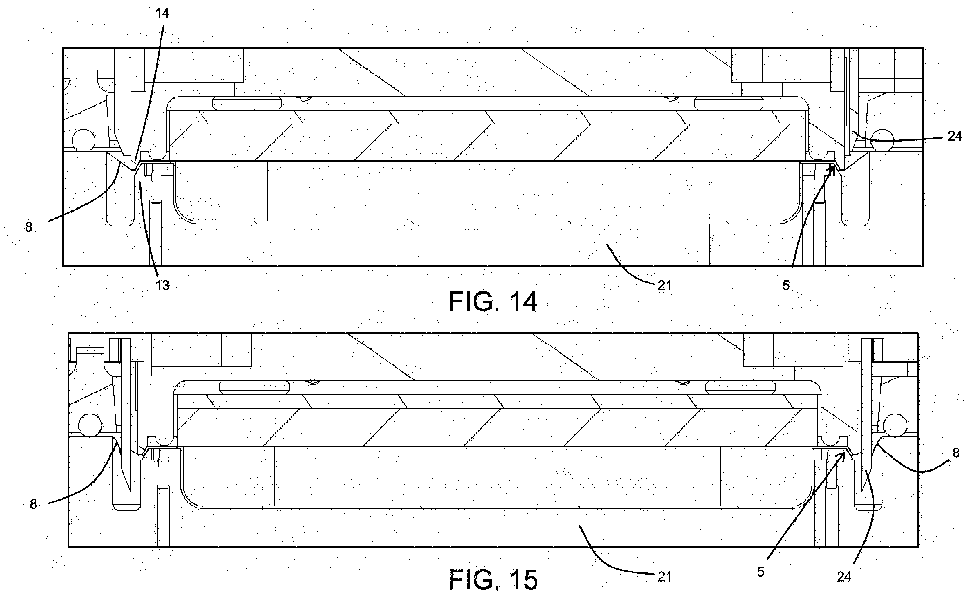

According to several preferred embodiments, as in the case illustrated in the accompanying figures, at least one of either the supporting base 10 or the closing device 11 also comprises at least one cutting element 24 that is positioned concentric with and on the outside of the first half-mould 13 or the second half-mould 14. That cutting element 24, which is advantageously an annular blade, is movable between a passive position in which it is retracted relative to a lying plane identified by the first half-mould 13 or respectively by the second half-mould 14, for in use not interfering with a covering film 8 and/or the annular band 2 which may be resting on the first half-mould 13 or respectively on the second half-mould 14 during the sealing step (Figure 14), and an active position in which it projects relative to the lying plane identified by the first half-mould 13 or respectively by the second half-mould 14 for in use interfering with a covering film 8 resting on the first half-mould 13 or respectively on the second half-mould 14 and cutting it (Figure 15).

In the case of the embodiments illustrated in Figures 17 to 19, the cutting element 24 is coaxial with the second body 30 and is advantageously moved from the passive position to the active position either when the second body 30 is moved from the non-operating position to the operating position (preferably, in this case, the cutting element 24 in the passive position is closer to the covering film 8 than the second body 30 in the non-operating position - Figures 17 and 19), or before that happens (however, advantageously after the closing of the mould - Figure 18).

If the apparatus is able to perform both hot bending and sealing, in the preferred embodiment the apparatus is also designed in such a way that it can package products in a controlled atmosphere or in a vacuum.

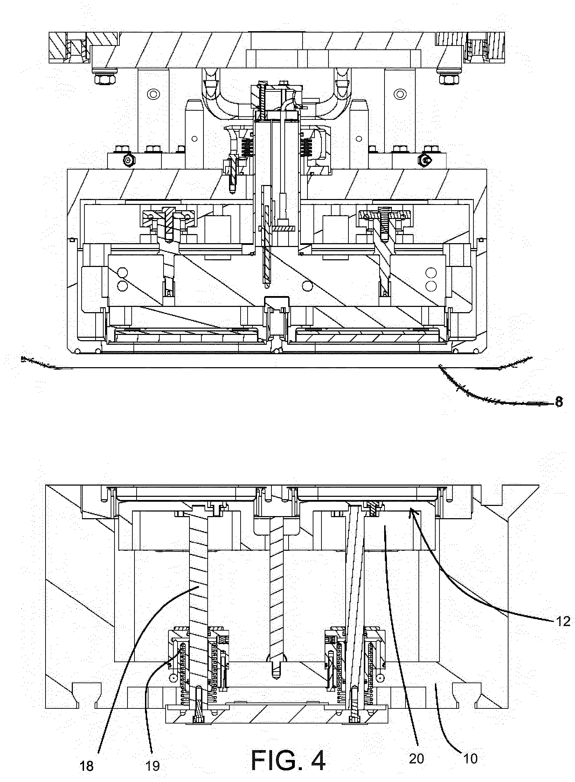

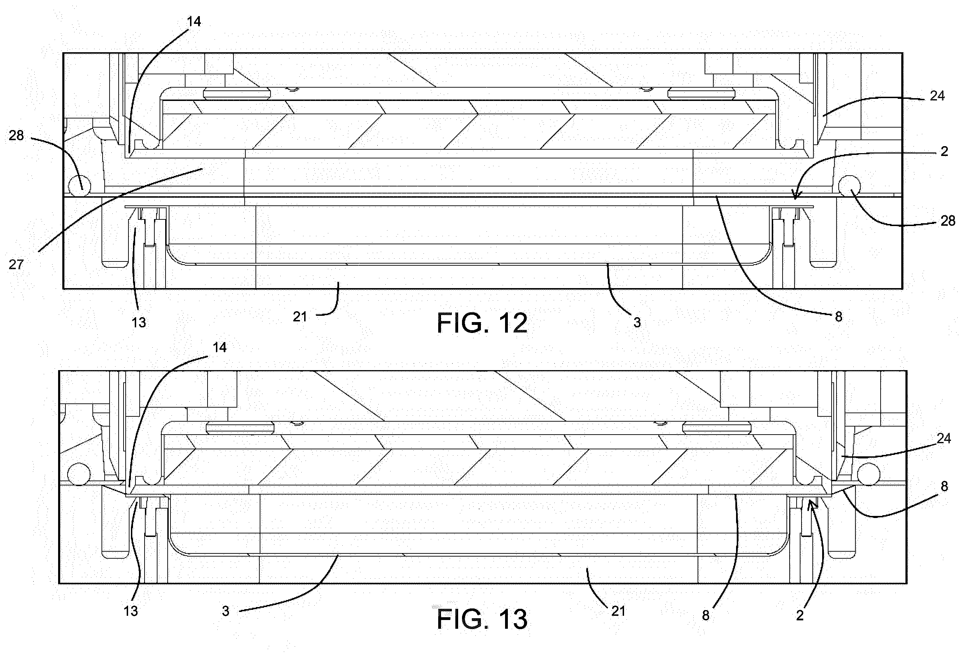

For that purpose, in the embodiment illustrated the apparatus also comprises the containment body 23 internally forming a containment chamber and comprising a first part 22 and a second part 26. The first part 22 is part of the supporting base 10, whilst the second part 26 surrounds the closing device 11. The containment chamber corresponds to the joining of the first half-chamber 21 and a second half-chamber 27 formed by the second part 26. At least one of either the first part 22 or the second part 26 is movable relative to the other between an uncoupled position in which the first part 22 and the second part 26 are at a distance from each other and allow access to the containment chamber (Figure 3), and a coupled position in which they are coupled in a fluidtight way by means of suitable gaskets 28 (Figures 4 and 12). In the coupled position, the housing seat 12, the closing device 11, the cutting element 24 and the annular mould are positioned in the containment chamber. A vacuum generating device (not illustrated) is connected to the containment chamber and is able to generate the vacuum in the containment chamber when the first part 22 and the second part 26 are in the coupled position.

If packaging in a controlled atmosphere is required, advantageously, connected to the containment chamber there will be a gaseous fluid feeding device (not illustrated) able to feed a gaseous fluid into the containment chamber when the first part 22 and the second part 26 are in the coupled position.

In the preferred embodiment, the first part 22 and the second part 26 are fixed respectively to the housing seat 12 and to the closing device 11 at least during the movement between the uncoupled position and the coupled position. Moreover, advantageously, when the first part 22 and the second part 26 are positioned in the coupled position, the housing seat 12 and/or the closing device 11 (only the latter in the embodiment illustrated) are also movable relative to one another between a back position in which a free space is present between the first half-mould 13 and the second half-mould 14, and a forward position in which the first half-mould 13 and the second half-mould 14 are coupled for clamping between them the annular band 2 and the covering film 8.

Figures 3 to 9, and the corresponding enlargements shown in Figures 10 to 16, schematically illustrate operation of the apparatus made according to the embodiment of this invention in which the apparatus itself is able to simultaneously perform both the hot bending step and the sealing step. In contrast, if the apparatus is intended to perform only the hot bending step, operation will be roughly the same as that described below without the parts relating to the sealing and/or packaging.

As shown in Figure 3, with the first part 22 and the second part 26 in the uncoupled position, and consequently the supporting base 10 and the closing device 11 in the home position, at least one containment element 1 equipped with a flat annular band 2 can be positioned at the housing seat 12. However, the presence of the insertion and extraction element 20 keeps the containment element 1 outside the housing seat 12. At the same time the covering film 8 is held stationary above the containment element 1.

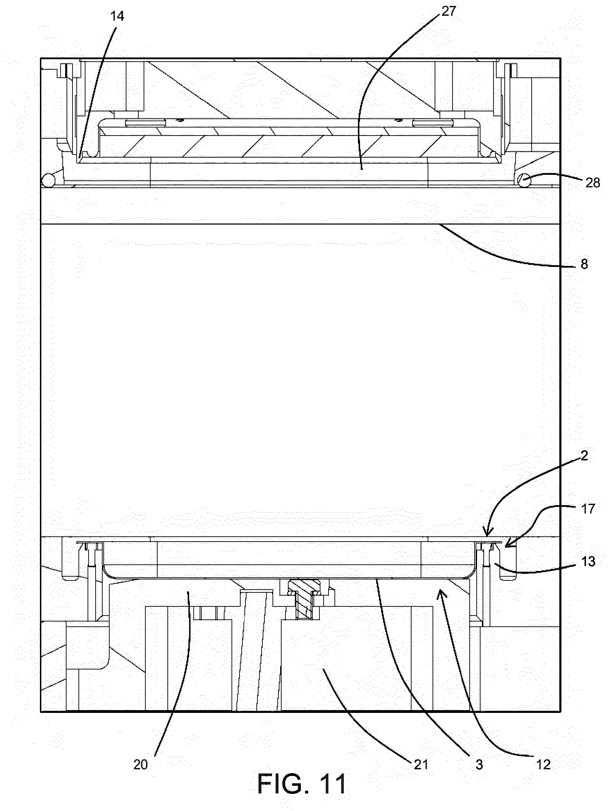

The supporting base 10 and the first part 22 of the containment body 23 then begin moving upwards, sliding along the guiding columns 18. Consequently, the insertion and extraction element 20 is gradually inserted in the first half-chamber 21 and the bottom wall 3 enters the housing seat 12 until the annular band 2 rests on the first half-mould 13 (Figure 11).

The first part 22 of the containment body 23 then continues moving upwards until it makes contact against the second part 26, sealing the containment chamber in a fluidtight way. In this position (Figure 12) the containment element 1 is positioned in the housing seat 12, the covering film 8 is retained between the first part 22 and the second part 26, and the closing device 11 is at a distance from the supporting base 10. The covering film 8 is still at a distance from the annular band 2 of the containment element 1.

In this configuration, by activating the vacuum generating device and, if necessary, subsequently the gaseous fluid feeding device, it is possible to create the vacuum or a controlled atmosphere in the containment chamber and therefore in the containment element 1 (in which the product to be packaged will be present) that is in fluid communication with the containment chamber.

When this operation has ended, the closing device 11 begin moving downwards towards the supporting base 10. During its movement, it rests first on the covering film 8 and pushes it downwards (slightly deforming it) until both rest on the annular band 2 (Figure 13).

Thanks to the fact that at least one of either the first half-mould 13 or the second half-mould 14 is hot (the second half-mould 14 in the accompanying figures), from the moment of contact with it, the covering film 8 and the annular band 2 begin to be heat-sealed; the subsequent further downward movement of the closing device 11, until the supporting base 10 and the closing device 11 are in the operating position, completes sealing of the covering film 8 to the annular band 2 and causes hot bending of the annular band 2 (Figure 14).

When this operation has ended, the cutting element 24 moves from the passive position to the active position and cuts to size the covering film 8 (Figure 15) and if necessary also the annular band of the containment element 1.

At this point the process is complete and it is possible to return the supporting base 10 and the closing device 11 to the home position (and at the same time the first part 22 and the second part 26 to the uncoupled position). Towards the end of the movement, the insertion and extraction element 20 is inserted from below in the housing seat 12 and causes extraction of the sealed containment element 1. At the end of the movement the containment element 1 is therefore in the same position as at the start, but is sealed and has the annular band 2 modified to constitute the shaped flange 5 (Figure 16).

This invention brings important advantages.

First, thanks to the idea of making all of the containment elements initially with a flat annular band, then shaping only the annular band and only if necessary, it guarantees a high degree of flexibility of choice in terms of the type of containment element to be used each time, even in the case of small-scale production where only one thermoforming line can be afforded. Moreover, the fact that any shaping of the flange can be performed at the same time as sealing of the containment element allows the result to be achieved without increasing production costs and with extremely limited increases in terms of operating energy costs.

Finally, it should be noticed that this invention is relatively easy to produce and that even the cost linked to implementing the invention is not very high.

## Claims

1. A method for making a containment element that has a bottom wall (3), a lateral wall (4) connected at the bottom to the bottom wall (3) and a shaped perimetric flange that extends outwards from an upper part of the lateral wall (4), wherein the method comprises:
an operating step of taking a flat sheet constituted of a thermoformable material;
a thermoforming operating step in which the flat sheet is thermoformed and the bottom wall (3), the lateral wall (4) and an annular band (2) that projects outwards from the upper part of the lateral wall (4) are created; and, subsequently
a hot bending operating step for bending the annular band (2), dividing the annular band (2) into a first annular portion (6) and a second annular portion (7) which are concentric and are not coplanar, after the hot bending the annular band (2) constituting the shaped perimetric flange.

2. The method according to claim 1, **characterised in that** it also comprises, after the thermoforming step, a positioning operating step for positioning a covering film (8) above the containment element (1) in such a way that a part of the covering film (8) rests on the annular band (2) at least for part of the outward extent of the annular band (2), relative to the upper part of the lateral wall (4); and **in that** the hot bending step comprises a heating step for heating the annular band (2) and the part of the covering film (8) positioned on the annular band (2), a step of heat-sealing the covering film (8) to the annular band (2), and a step of hot bending the annular band (2).

3. The method according to claim 2, **characterised in that** the hot bending step is performed after the heat-sealing step, simultaneously with the heat-sealing step or before the heat-sealing step.

4. The method according to claim 2 or 3, **characterised in that** it also comprises, after the thermoforming and heat-sealing steps, a step of cutting the covering film (8) along a profile that surrounds the annular band (2).

5. The method according to claim 4, **characterised in that** the step of cutting the covering film (8) is performed before or after the hot bending step.

6. A method for packaging products comprising the operating steps of making a containment element (1) according to any of the preceding claims and of positioning the product in the containment element (1) after the thermoforming operating step and before the hot bending operating step.

7. The method according to claim 6 when it is dependent on claim 2, **characterised in that** it also comprises an operating step of creating a modified atmosphere inside the containment element (1) before the hot bending operating step.

8. An apparatus for heat-sealing a covering film (8) to an annular band (2) of a containment element (1), wherein the containment element (1) has a bottom wall (3) and a lateral wall (4) connected at the bottom to the bottom wall (3), the annular band (2) extending outwards from an upper part of the lateral wall (4), the apparatus comprising:
a supporting base (10) that comprises a housing seat (12) suitable for in use housing the bottom wall (3) and the lateral wall (4) of a containment element (1), and a first half-mould (13) that has an annular shape and that surrounds the housing seat (12) and is suitable for in use supporting the annular band (2);
a closing device (11) positioned above the supporting base (10), the closing device (11) comprising at least a second half-mould (14) that has an annular shape and that is shaped to match the first half-mould (13);
and a retaining device operatively associated with the supporting base (10) and with the closing device (11) and suitable for in use retaining a covering film (8) between the first half-mould (13) and the second half-mould (14);
wherein
at least one of either the supporting base (10) or the closing device (11) is movable relative to the other between a home position in which the two are at a distance from one another, and an operating position in which the first half-mould (13) and the second half-mould (14) are coupled and define an annular mould suitable for in use clamping the annular band (2); the apparatus being **characterized in that**
at least one of either the first half-mould (13) or the second half-mould (14) has a moulding surface (15) that comprises at least a first annular zone (16) that in the operating position surrounds the housing seat (12) and a second annular zone (17) concentric with and adjacent to the first annular portion (6), the first annular zone (16) and the second annular zone (17) not being coplanar; and
the supporting base (10) and/or the closing device (11) also comprising one or more heating elements for heating either only the first half-mould (13) or only the second half-mould (14) or both for in use heating the annular band (2) and the covering film (8) placed on it.

9. The apparatus according to claim 8, wherein the supporting base (10) or respectively the closing device (11) also comprise at least one cutting element (24) that is positioned concentric with and on the outside of the first half-mould (13) or respectively the second half-mould (14), and that is movable between a passive position in which it is retracted relative to a lying plane identified by the first half-mould (13) or respectively by the second half-mould (14), for in use not interfering with a covering film (8) resting on the first half-mould (13) or respectively on the second half-mould (14), and an active position in which it projects relative to the lying plane identified by the first half-mould (13) or respectively by the second half-mould (14) for in use interfering with a covering film (8) resting on the first half-mould (13) or respectively on the second half-mould (14).

10. The apparatus according to claim 8 or 9, wherein at least one of either the first half-mould (13) or the second half-mould (14) comprises a first body (29) and a second body (30) that are annular and concentric, wherein the second body (30) is telescopically movable relative to the first body (29) between a non-operating position and an operating position, and wherein when the second body (30) is in the operating position the first half-mould (13) and the second half-mould (14) are couplable and can constitute the annular mould, and when the second body (30) is in the non-operating position the first half-mould (13) and the second half-mould (14) cannot fully constitute the annular mould.

11. The apparatus according to claim 8 or 9, wherein the first body (29) and the second body (30) are part of the second half-mould (14), wherein the first body (29) is mounted on the inside relative to the second body (30), and wherein the second body (30) is retracted relative to a resting surface defined by the first body (29) when it is in the non-operating position, and projects relative to it when it is in the operating position.

12. The apparatus according to claim 8, 9, 10 or 11, wherein the supporting base (10) also comprises an insertion and extraction element (20) associated with the housing seat (12), at least one of either the housing seat (12) or the insertion and extraction element (20) being movable relative to the other between an engaged position, in which the insertion and extraction element (20) prevents the insertion of a containment element (1) in the housing seat (12), and a disengaged position, in which the insertion and extraction element (20) allows the insertion of a containment element (1) in the housing seat (12).

13. The apparatus according to any of claims 8 to 12, also comprising:
a containment body (23) that internally defines a containment chamber and that comprises a first part (22) and a second part (26) movable between an uncoupled position in which they are at a distance from each other and allow access to the containment chamber, and a coupled position in which they are coupled in a fluidtight way and they contain at least the housing seat (12), the closing device (11) and the annular mould;
a vacuum generating device connected to the containment chamber and able to generate the vacuum in the containment chamber when the first part (22) and the second part (26) are in the coupled position; and
a gaseous fluid feeding device connected to the containment chamber and able to feed a gaseous fluid into the containment chamber when the first part (22) and the second part (26) are in the coupled position.

14. The apparatus according to claim 13, wherein the first part (22) and the second part (26) are fixed respectively to the housing seat (12) and to the closing device (11) at least during the movement between the uncoupled position and the coupled position, and wherein the housing seat (12) and/or the closing device (11) are also movable respectively relative to the first part (22) and to the second part (26) positioned in the coupled position, between a back position in which a free space is present between the first half-mould (13) and the second half-mould (14), and a forward position in which the first half-mould (13) and the second half-mould (14) are coupled.

15. A thermoforming machine comprising a thermoforming station suitable for in use thermoforming a containment element (1) that has a bottom wall (3) and a lateral wall (4) connected at the bottom to the bottom wall (3) and an annular band (2) that extends outwards from an upper part of the lateral wall (4), and an apparatus with optional activation, positioned downstream of the thermoforming station and comprising:
a supporting base (10) that in turn comprises a housing seat (12) suitable for in use housing the bottom wall (3) and the lateral wall (4) of a containment element (1), and a first half-mould (13) that has an annular shape and that surrounds the housing seat (12) and is suitable for in use supporting the annular band (2);
a closing device (11) positioned above the supporting base (10), the closing device (11) comprising at least a second half-mould (14) that has an annular shape and that is shaped to match the first half-mould (13);
at least one of either the supporting base (10) or the closing device (11) being movable relative to the other between a home position in which the two are at a distance from one another, and an operating position in which the first half-mould (13) and the second half-mould (14) are coupled and define an annular mould suitable for in use clamping the annular band (2); the machine being charcaterized in that
at least one of either the first half-mould (13) or the second half-mould (14) has a moulding surface (15) that comprises at least a first annular zone (16) that in the operating position surrounds the housing seat (12) and a second annular zone (17) concentric with and adjacent to the first annular zone (16), the first annular zone (16) and the second annular zone (17) not being coplanar; and
the supporting base (10) and/or the closing device (11) also comprise one or more heating elements for heating either only the first half-mould (13) or only the second half-mould (14) or both for in use heating the annular band (2).

16. The machine according to claim 15, wherein the supporting base (10) or respectively the closing device (11) also comprise at least one cutting element (24) that is positioned concentric with and on the outside of the first half-mould (13) or respectively the second half-mould (14), and that is movable between a passive position in which it is retracted relative to a lying plane identified by the first half-mould (13) or respectively by the second half-mould (14), for in use not interfering with the annular band (2) resting on the first half-mould (13) or respectively on the second half-mould (14), and an active position in which it projects relative to the lying plane identified by the first half-mould (13) or respectively by the second half-mould (14) for in use interfering with the annular band (2) resting on the first half-mould (13) or respectively on the second half-mould (14).

17. The machine according to claim 15 or 16, wherein the supporting base (10) also comprises an insertion and extraction element (20) associated with the housing seat (12), at least one of either the housing seat (12) or the insertion and extraction element (20) being movable relative to the other between an engaged position, in which the insertion and extraction element (20) prevents the insertion of a containment element (1) in the housing seat (12), and a disengaged position, in which the insertion and extraction element (20) allows the insertion of a containment element (1) in the housing seat (12).

## Patentansprüche

1. Ein Verfahren zur Herstellung eines Aufnahmeelements, das eine Bodenwand (3), eine Seitenwand (4), die am Boden mit der Bodenwand (3) verbunden ist, und einen geformten umlaufenden Flansch, der sich von einem oberen Teil der Seitenwand (4) nach außen hin erstreckt, hat, wobei das Verfahren Folgendes beinhaltet:
einen Arbeitsschritt des Ergreifens eines flachen Blatts, das aus einem thermoformbaren Material besteht;
einen Arbeitsschritt der Thermoformung, bei dem das flache Blatt thermogeformt wird und die Bodenwand (3), die Seitenwand (4) und ein ringförmiges Band (2), das vom oberen Teil der Seitenwand (4) nach außen hervorragt, gebildet werden; und darauf folgend
einen Arbeitsschritt des Warmbiegens, um das ringförmige Band (2) zu biegen, dabei das ringförmige Band (2) in einen ersten ringförmigen Abschnitt (6) und einen zweiten ringförmigen Abschnitt (7) zu teilen, die konzentrisch sind und nicht komplanar sind, nach dem Warmbiegen stellt das ringförmige Band (2) dabei den geformten umlaufenden Flansch dar.

2. Das Verfahren nach dem Patentanspruch 1, **gekennzeichnet dadurch, dass** es, nach dem Thermoformungsschritt, außerdem einen Arbeitsschritt der Positionierung umfasst, um eine Deckfolie (8) solcherart über dem Aufnahmeelement (1) zu positionieren, dass ein Teil der Deckfolie (8) auf dem ringförmigen Band (2) ruht, zumindest in einem Teil der nach außen gerichteten Ausdehnung des ringförmigen Bands (2) im Verhältnis zum oberen Teil der Seitenwand (4); und dadurch, dass der Schritt des Warmbiegens einen Erhitzungsschritt umfasst, um das ringförmige Band (2) und den Teil der Deckfolie (8), der auf dem ringförmigen Band (2) platziert ist, zu erhitzen, einen Schritt des Heißsiegelns der Deckfolie (8) am ringförmigen Band (2), und einen Schritt des Warmbiegens des ringförmigen Bands (2).

3. Das Verfahren nach dem Patentanspruch 2, **gekennzeichnet dadurch, dass** der Schritt des Warmbiegens nach dem Schritt des Heißsiegelns, gleichzeitig mit dem Heißsiegelungsschritt oder vor dem Heißsiegelungsschritt durchgeführt wird.

4. Das Verfahren nach dem Patentanspruch 2 oder 3, **gekennzeichnet dadurch, dass** es außerdem, nach den Schritten der Thermoformung und des Heißsiegelns, einen Schritt des Abschneidens der Deckfolie (8) entlang eines Profils, das das ringförmige Band (2) umringt, beinhaltet.

5. Das Verfahren nach dem Patentanspruch 4, **gekennzeichnet dadurch, dass** der Schritt des Abschneidens der Deckfolie (8) vor oder nach dem Schritt des Heißsiegelns durchgeführt wird.

6. Ein Verfahren zur Verpackung von Produkten, das die Arbeitsschritte der Herstellung eines Aufnahmeelements (1) nach jedem der vorherigen Patentansprüche und der Platzierung des Produkts in dem Aufnahmeelement (1) nach dem Arbeitsschritt der Thermoformung und vor dem Arbeitsschritt des Warmbiegens beinhaltet.

7. Das Verfahren nach dem Patentanspruch 6, wenn er vom Patentanspruch 2 abhängig ist, **gekennzeichnet dadurch, dass** es außerdem einen Arbeitsschritt der Erzeugung einer modifizierten Atmosphäre im Inneren des Aufnahmeelements (1) vor dem Arbeitsschritt des Warmbiegens umfasst.

8. Eine Vorrichtung zum Heißsiegeln einer Deckfolie (8) an einem ringförmigen Band (2) eines Aufnahmeelements (1), wobei das Aufnahmeelement (1) eine Bodenwand (3) und eine Seitenwand (4), die am Boden mit der Bodenwand (3) verbunden ist, hat, das ringförmige Band (2) erstreckt sich dabei von einem oberen Teil der Seitenwand (4) nach außen, die Vorrichtung beinhaltet dabei Folgendes:
ein Grundgestell (10), das einen Gehäusesitz (12) beinhaltet, der dazu geeignet ist, im Gebrauch die Bodenwand (3) und die Seitenwand (4) eines Aufnahmeelements (1) und eine erste Werkzeughälfte (13), die eine Ringform hat und die den Gehäusesitz (12) umringt und die sich dazu eignet, im Gebrauch das ringförmige Band (2) zu halten, aufzunehmen;
eine Schließvorrichtung (11), die über dem Grundgestell (10) platziert ist, die Schließvorrichtung (11) beinhaltet dabei mindestens eine zweite Werkzeughälfte (14), die eine Ringform hat und so geformt ist, dass sie zur ersten Werkzeughälfte (13) passt;
und eine Haltevorrichtung, die operativ mit dem Grundgestell (10) und mit der Schließvorrichtung (11) verbunden ist und sich dazu eignet, im Gebrauch eine Deckfolie (8) zwischen der ersten Werkzeughälfte (13) und der zweiten Werkzeughälfte (14) festzuhalten;
wobei
zumindest jeweils entweder das Grundgestell (10) oder die Schließvorrichtung (11) im Verhältnis zum/zur jeweils anderen zwischen einer Grundstellung, in der die beiden voneinander entfernt sind, und einer Betriebsstellung, in der die erste Werkzeughälfte (13) und die zweite Werkzeughälfte (14) miteinander verbunden sind und ein ringförmiges Werkzeug bilden, das geeignet ist, um im Gebrauch das ringförmige Band (2) einzuspannen, beweglich ist; die Vorrichtung ist dabei **dadurch gekennzeichnet, dass** mindestens jeweils entweder die erste Werkzeughälfte (13) oder die zweite Werkzeughälfte (14) eine Formteiloberfläche (15) hat, die mindestens einen ersten ringförmigen Bereich (16) beinhaltet, der in der Betriebsstellung den Gehäusesitz (12) umringt, und einen zweiten ringförmigen Bereich (17), der konzentrisch mit dem ersten ringförmigen Abschnitt (6) ist und neben diesem liegt, der erste ringförmige Bereich (16) und der zweite ringförmige Bereich (17) sind dabei nicht komplanar;
und das Grundgestell (10) und/oder die Schließvorrichtung (11) beinhalten dabei außerdem ein oder mehrere Heizelemente, um entweder nur die erste Werkzeughälfte (13) oder nur die zweite Werkzeughälfte (14) oder beide zu erhitzen, um im Gebrauch das ringförmige Band (2) und die Deckfolie (8), die darauf platziert ist, zu erhitzen.

9. Die Vorrichtung nach dem Patentanspruch 8, wobei das Grundgestell (10) beziehungsweise die Schließvorrichtung (11) außerdem mindestens ein Schneideelement (24) beinhaltet, das konzentrisch mit und an der Außenseite der ersten Werkzeughälfte (13) beziehungsweise der zweiten Werkzeughälfte (14) platziert ist, und das zwischen einer passiven Position, in der es im Verhältnis zu einer liegenden Ebene, die durch die erste Werkzeughälfte (13) beziehungsweise die zweite Werkzeughälfte (14) identifiziert ist, zurückgezogen ist, um im Gebrauch nicht mit einer Deckfolie (8) in Berührung zu kommen, die auf der ersten Werkzeughälfte (13) beziehungsweise auf der zweiten Werkzeughälfte (13) ruht, und einer aktiven Stellung, in der es im Verhältnis zur liegenden Ebene, die durch die erste Werkzeughälfte (13) beziehungsweise die zweite Werkzeughälfte (14) identifiziert ist, hervorragt, um im Gebrauch mit einer Deckfolie (8) in Berührung zu kommen, die auf der ersten Werkzeughälfte (13) beziehungsweise auf der zweiten Werkzeughälfte (14) ruht, beweglich ist.

10. Die Vorrichtung nach dem Patentanspruch 8 oder 9, wobei jeweils mindestens entweder die erste Werkzeughälfte (13) oder die zweite Werkzeughälfte (14) einen ersten Körper (29) und einen zweiten Körper (30) beinhaltet, die ringförmig und konzentrisch sind, wobei der zweite Körper (30) teleskopisch im Verhältnis zum ersten Körper (29) zwischen einer nicht aktiven Stellung und einer Betriebsstellung beweglich ist, und wobei, wenn der zweite Körper (30) in der Betriebsstellung ist, die erste Werkzeughälfte (13) und die zweite Werkzeughälfte (14) miteinander verbunden werden können und das ringförmige Werkzeug bilden können, und wenn der zweite Körper (30) in der nicht aktiven Stellung ist, die erste Werkzeughälfte (13) und die zweite Werkzeughälfte (14) das ringförmige Werkzeug nicht vollständig bilden können.

11. Die Vorrichtung nach dem Patentanspruch 8 oder 9, wobei der erste Körper (29) und der zweite Körper (30) Teil der zweiten Werkzeughälfte (14) sind, wobei der erste Körper (29) im Verhältnis zum zweiten Körper (30) an der Innenseite montiert ist, und wobei der zweite Körper (30) im Verhältnis zu einer Ruhefläche, die durch den ersten Körper (29) definiert wird, wenn er sich in der nicht aktiven Stellung befindet, zurückgezogen ist, und im Verhältnis zu diesem hervorragt, wenn er sich in der Betriebsstellung befindet.

12. Die Vorrichtung nach dem Patentanspruch 8, 9, 10 oder 11, wobei das Grundgestell (10) außerdem ein Einsetz- und Entnahmeelement (20) beinhaltet, das mit dem Gehäusesitz (12) verbunden ist, wobei jeweils zumindest entweder der Gehäusesitz (12) oder das Einsetz- und Entnahmeelement (20) im Verhältnis zum anderen zwischen einer eingerasteten Stellung, in der das Einsetz- und Entnahmeelement (20) das Einsetzen eines Aufnahmeelements (1) in den Gehäusesitz (12) verhindert, und einer nicht eingerasteten Stellung, in der das Einsetz- und Entnahmeelement (20) das Einsetzen eines Aufnahmeelements (1) in den Gehäusesitz (12) erlaubt, beweglich ist.

13. Die Vorrichtung nach jedem der Patentansprüche 8 bis 12, außerdem Folgendes beinhaltend:
einen Aufnahmekörper (23), der in seinem Inneren eine Aufnahmekammer definiert und der einen ersten Teil (22) und einen zweiten Teil (26) beinhaltet, die zwischen einer nicht verbundenen Stellung, in der sie voneinander entfernt sind und den Zugang zur Aufnahmekammer erlauben, und einer verbundenen Stellung, in der sie flüssigkeitsdicht miteinander verbunden sind, beweglich sind und sie enthalten zumindest den Gehäusesitz (12), die Schließvorrichtung (11) und das ringförmige Werkzeug;
eine Vorrichtung zur Erzeugung eines Vakuums, die mit der Aufnahmekammer verbunden ist und dazu imstande ist, das Vakuum in der Aufnahmekammer zu erzeugen, wenn der erste Teil (22) und der zweite Teil (26) in der verbundenen Stellung sind; und
eine Zufuhrvorrichtung für einen Gasfluss, die mit der Aufnahmekammer verbunden ist und dazu imstande ist, einen Gasfluss in die Aufnahmekammer einzuspeisen, wenn er erste Teil (22) und der zweite Teil (26) in der verbundenen Stellung sind.

14. Die Vorrichtung nach dem Patentanspruch 13, wobei der erste Teil (22) und der zweite Teil (26) jeweils am Gehäusesitz (12) und an der Schließvorrichtung (11) befestigt sind, zumindest während der Bewegung zwischen der nicht verbundenen Stellung und der verbundenen Stellung, und wobei der Gehäusesitz (12) und/oder die Schließvorrichtung (11) außerdem jeweils im Verhältnis zum ersten Teil (22) und zum zweiten Teil (26), wenn sie sich in der verbundenen Stellung befinden, beweglich sind, zwischen einer hinteren Stellung, in der sich zwischen der ersten Werkzeughälfte (13) und der zweiten Werkzeughälfte (14) ein Leerraum befindet, und einer vorderen Stellung, in der die erste Werkzeughälfte (13) und die zweite Werkzeughälfte (14) verbunden sind.

15. Eine Thermoformungsmaschine, die eine Thermoformungsstation beinhaltet, die sich dazu eignet, um im Gebrauch ein Aufnahmeelement (1) wärmezuformen, das eine Bodenwand (3) und eine Seitenwand (4), die am Boden mit der Bodenwand (3) verbunden ist, und ein ringförmiges Band (2) das sich von einem oberen Teil der Seitenwand (4) nach außen erstreckt, und eine Vorrichtung mit optionaler Aktivierung hat, die nach der Thermoformungsstation angebracht ist und Folgendes beinhaltet:
ein Grundgestell (10), das seinerseits einen Gehäusesitz (12) beinhaltet, der dazu geeignet ist, im Gebrauch die Bodenwand (3) und die Seitenwand (4) eines Aufnahmeelements (1) und eine erste Werkzeughälfte (13), die eine Ringform hat und die den Gehäusesitz (12) umringt und die sich dazu eignet, im Gebrauch das ringförmige Band (2) zu halten, aufzunehmen;
eine Schließvorrichtung (11), die über dem Grundgestell (10) platziert ist, die Schließvorrichtung (11) beinhaltet dabei mindestens eine zweite Werkzeughälfte (14), die eine Ringform hat und die so geformt ist, dass sie zur ersten Werkzeughälfte (13) passt;
wobei zumindest jeweils entweder das Grundgestell (10) oder die Schließvorrichtung (11) im Verhältnis zum/zur jeweils anderen zwischen einer Grundstellung, in der die beiden voneinander entfernt sind, und einer Betriebsstellung, in der die erste Werkzeughälfte (13) und die zweite Werkzeughälfte (14) miteinander verbunden sind und ein ringförmiges Werkzeug bilden, das geeignet ist, um im Gebrauch das ringförmige Band (2) einzuspannen, beweglich ist;
die Maschine ist dabei **dadurch gekennzeichnet**, das mindestens jeweils entweder die erste Werkzeughälfte (13) oder die zweite Werkzeughälfte (14) eine Formteiloberfläche (15) hat, die mindestens einen ersten ringförmigen Bereich (16) beinhaltet, der in der Betriebsstellung den Gehäusesitz (12) umringt, und einen zweiten ringförmigen Bereich (17), der konzentrisch mit dem ersten ringförmigen Abschnitt (6) ist und neben diesem liegt, der erste ringförmige Bereich (16) und der zweite ringförmige Bereich (17) sind dabei nicht komplanar; und
das Grundgestell (10) und/oder die Schließvorrichtung (11) beinhaltet dabei außerdem ein oder mehrere Heizelemente, um entweder nur die erste Werkzeughälfte (13) oder nur die zweite Werkzeughälfte (14) oder beide zu erhitzen, um im Gebrauch das ringförmige Band (2) zu erhitzen.

16. Die Maschine nach dem Patentanspruch 15, wobei das Grundgestell (10) beziehungsweise die Schließvorrichtung (11) außerdem mindestens ein Schneideelement (24) umfasst, das konzentrisch mit und an der Außenseite der ersten Werkzeughälfte (13) beziehungsweise der zweiten Werkzeughälfte (14) positioniert ist, und das zwischen einer passiven Stellung, in der es im Verhältnis zu einer liegenden Ebene, die durch die erste Werkzeughälfte (13) beziehungsweise die zweite Werkzeughälfte (14) identifiziert ist, zurückgezogen ist, um im Gebrauch nicht mit dem ringförmigen Band (2) in Berührung zu kommen, das auf der ersten Werkzeughälfte (13) beziehungsweise auf der zweiten Werkzeughälfte (13) ruht, und einer aktiven Stellung, in der es im Verhältnis zur liegenden Ebene, die durch die erste Werkzeughälfte (13) beziehungsweise die zweite Werkzeughälfte (14) identifiziert ist, hervorragt, um im Gebrauch mit dem ringförmigen Band (2) in Berührung zu kommen, das auf der ersten Werkzeughälfte (13) beziehungsweise auf der zweiten Werkzeughälfte (13) ruht, beweglich ist.

17. Die Maschine nach dem Patentanspruch 15 oder 16, wobei das Grundgestell (10) außerdem ein Einsetz- und Entnahmeelement (20) beinhaltet, das mit dem Gehäusesitz (12) verbunden ist, wobei zumindest jeweils entweder der Gehäusesitz (12) oder das Einsetz- und Entnahmeelement (20) im Verhältnis zum jeweils anderen zwischen einer eingerasteten Stellung, in der das Einsetz- und Entnahmeelement (20) das Einsetzen eines Aufnahmeelements (1) in den Gehäusesitz (12) verhindert, und einer nicht eingerasteten Stellung, in der das Einsetz- und Entnahmeelement (20) das Einsetzen eines Aufnahmeelements (1) in den Gehäusesitz (12) erlaubt, beweglich ist.

## Revendications

1. Un procédé de fabrication d'un élément-contenant qui a une paroi de fond (3), une paroi latérale (4) raccordée au bas de la paroi de fond (3) et une bride périmétrique profilée qui s'étend vers l'extérieur à partir d'une partie supérieure de la paroi latérale (4), où le procédé comprend:
une étape opérationnelle consistant à prendre une feuille plate constituée d'un matériau thermoformable;
une étape opérationnelle de thermoformage durant laquelle la feuille plate est thermoformée et la paroi de fond (3), la paroi latérale (4) et une bande annulaire (2) qui dépasse vers l'extérieur à partir de la partie supérieure de la paroi latérale (4) sont créées; et, successivement
une étape opérationnelle de pliage à chaud pour plier la bande annulaire (2), en divisant la bande annulaire (2) en une première portion annulaire (6) et une deuxième portion annulaire (7) qui sont concentriques et sont non coplanaires, après le pliage à chaud la bande annulaire (2) constituant la bride périmétrique profilée.

2. Le procédé selon la revendication 1, **caractérisé en ce qu'**il comprend aussi, après l'étape de thermoformage, une étape opérationnelle de positionnement pour positionner un film de recouvrement (8) au-dessus de l'élément-contenant (1) de manière à ce qu'une partie du film de recouvrement (8) s'appuie sur la bande annulaire (2) au moins pour une partie de l'extension vers l'extérieur de la bande annulaire (2), par rapport à la partie supérieure de la paroi latérale (4) ; et **en ce que** l'étape de pliage à chaud comprend une étape de chauffage pour chauffer la bande annulaire (2) et la partie du film de recouvrement (8) positionnée sur la bande annulaire (2), une étape de thermoscellage du film de recouvrement (8) à la bande annulaire (2), et une étape de pliage à chaud de la bande annulaire (2).

3. Le procédé selon la revendication 2, **caractérisé en ce que** l'étape de pliage à chaud est effectuée après l'étape de thermoscellage, en même temps que l'étape de thermoscellage ou avant l'étape de thermoscellage.

4. Le procédé selon la revendication 2 ou 3, **caractérisé en ce qu'**il comprend aussi, après les étapes de thermoformage et de thermoscellage, une étape consistant à couper le film de recouvrement (8) le long d'un profilé qui entoure la bande annulaire (2).

5. Le procédé selon la revendication 4, **caractérisé en ce que** l'étape de coupe du film de recouvrement (8) est effectuée avant ou après l'étape de pliage à chaud.

6. Un procédé d'emballage de produits comprenant les étapes opérationnelles consistant à fabriquer un élément-contenant (1) selon l'une quelconque des revendications précédentes et à positionner le produit dans l'élément-contenant (1) après l'étape opérationnelle de thermoformage et avant l'étape opérationnelle de pliage à chaud.

7. Le procédé selon la revendication 6 lorsqu'il dépend de la revendication 2, **caractérisé en ce qu'**il comprend aussi une étape opérationnelle consistant à créer une atmosphère modifiée à l'intérieur de l'élément-contenant (1) avant l'étape opérationnelle de pliage à chaud.

8. Un appareil de thermoscellage d'un film de recouvrement (8) à une bande annulaire (2) d'un élément-contenant (1), dans lequel l'élément-contenant (1) a une paroi de fond (3) et une paroi latérale (4) raccordée au bas de la paroi de fond (3), la bande annulaire (2) s'étendant vers l'extérieur à partir d'une partie supérieure de la paroi latérale (4), l'appareil comprenant :
une base de support (10) qui comprend un siège de logement (12) destiné, lors de l'utilisation, à loger la paroi de fond (3) et la paroi latérale (4) d'un élément-contenant (1), et un premier demi-moule (13) qui a une forme annulaire et qui entoure le siège de logement (12) et est destiné, lors de l'utilisation, à supporter la bande annulaire (2);
un dispositif de fermeture (11) positionné au-dessus de la base de support (10), le dispositif de fermeture (11) comprenant au moins un deuxième demi-moule (14) qui a une forme annulaire et qui est conformé pour correspondre au premier demi-moule (13) ;
et un dispositif de retenue opérationnellement associé à la base de support (10) et au dispositif de fermeture (11) et destiné, lors de l'utilisation, à retenir un film de couverture (8) entre le premier demi-moule (13) et le deuxième demi-moule (14);
dans lequel
au moins l'un ou l'autre de la base de support (10) ou du dispositif de fermeture (11) est mobile par rapport à l'autre entre une position de repos dans laquelle les deux sont espacés l'un de l'autre, et une position opérationnelle dans laquelle le premier demi-moule (13) et le deuxième demi-moule (14) sont accouplés et définissent un moule annulaire destiné, lors de l'utilisation, à serrer la bande annulaire (2);
l'appareil étant **caractérisé en ce qu'**au moins l'un ou l'autre du premier demi-moule (13) ou du deuxième demi-moule (14) a une surface de moulage (15) qui comprend au moins une première zone annulaire (16) qui dans la position opérationnelle entoure le siège de logement (12) et une deuxième zone annulaire (17) concentrique et adjacente à la première portion annulaire (6), la première zone annulaire (16) et la deuxième zone annulaire (17) n'étant pas coplanaires; et
la base de support (10) et/ou le dispositif de fermeture (11) comprenant aussi un ou plusieurs éléments de chauffage pour chauffer soit uniquement le premier demi-moule (13) soit uniquement le deuxième demi-moule (14) ou les deux pour chauffer, lors de l'utilisation, la bande annulaire (2) et le film de recouvrement (8) placé sur celle-ci.

9. L'appareil selon la revendication 8, dans lequel la base de support (10) ou respectivement le dispositif de fermeture (11) comprennent aussi au moins un élément de coupe (24) qui est positionné concentrique à et à l'extérieur du premier demi-moule (13) ou respectivement du deuxième demi-moule (14), et qui est mobile entre une position passive dans laquelle il est rentré par rapport à un plan identifié par le premier demi-moule (13) ou respectivement par le deuxième demi-moule (14) pour, lors de l'utilisation, ne pas interférer avec un film de recouvrement (8) en appui sur le premier demi-moule (13) ou respectivement sur le deuxième demi-moule (14), et une position active dans laquelle il dépasse par rapport au plan identifié par le premier demi-moule (13) ou respectivement par le deuxième demi-moule (14) pour, lors de l'utilisation, interférer avec un film de recouvrement (8) en appui sur le premier demi-moule (13) ou respectivement sur le deuxième demi-moule (14).

10. L'appareil selon la revendication 8 ou 9, dans lequel au moins l'un ou l'autre du premier demi-moule (13) ou du deuxième demi-moule (14) comprend un premier corps (29) et un deuxième corps (30) qui sont annulaires et concentriques, dans lequel le deuxième corps (30) est mobile de manière télescopique par rapport au premier corps (29) entre une position non opérationnelle et une position opérationnelle, et dans lequel lorsque le deuxième corps (30) est dans la position opérationnelle le premier demi-moule (13) et le deuxième demi-moule (14) peuvent être accouplés et peuvent constituer le moule annulaire, et lorsque le deuxième corps (30) est dans la position non opérationnelle le premier demi-moule (13) et le deuxième demi-moule (14) ne peuvent pas constituer entièrement le moule annulaire.

11. L'appareil selon la revendication 8 ou 9, dans lequel le premier corps (29) et le deuxième corps (30) font partie du deuxième demi-moule (14), dans lequel le premier corps (29) est monté à l'intérieur par rapport au deuxième corps (30), et dans lequel le deuxième corps (30) est rentré par rapport à une surface d'appui définie par le premier corps (29) lorsqu'il est dans la position non opérationnelle, et dépasse par rapport à celle-ci lorsqu'il est dans la position opérationnelle.

12. L'appareil selon la revendication 8, 9, 10 ou 11, dans lequel la base de support (10) comprend aussi un élément d'insertion et d'extraction (20) associé au siège de logement (12), au moins l'un ou l'autre du siège de logement (12) ou de l'élément d'insertion et d'extraction (20) étant mobile par rapport à l'autre entre une position d'engagement, dans laquelle l'élément d'insertion et d'extraction (20) empêche l'insertion d'un élément-contenant (1) dans le siège de logement (12), et une position de désengagement, dans laquelle l'élément d'insertion et d'extraction (20) permet l'insertion d'un élément-contenant (1) dans le siège de logement (12).

13. L'appareil selon l'une quelconque des revendications de 8 à 12, comprenant aussi:
un corps-contenant (23) qui définit intérieurement une chambre-contenant et qui comprend une première partie (22) et une deuxième partie (26) mobiles entre une position désaccouplée dans laquelle elles sont espacées l'une de l'autre et permettent l'accès à la chambre-contenant, et une position accouplée dans laquelle elles sont accouplées de façon étanche et contiennent au moins le siège de logement (12), le dispositif de fermeture (11) et le moule annulaire;
un dispositif de génération de vide relié à la chambre-contenant et destiné à générer le vide dans la chambre-contenant lorsque la première partie (22) et la deuxième partie (26) sont dans la position accouplée; et
un dispositif d'alimentation d'un fluide gazeux relié à la chambre-contenant et destiné à alimenter un fluide gazeux dans la chambre-contenant lorsque la première partie (22) et la deuxième partie (26) sont dans la position accouplée.

14. L'appareil selon la revendication 13, dans lequel la première partie (22) et la deuxième partie (26) sont fixées respectivement au siège de logement (12) et au dispositif de fermeture (11) au moins pendant le mouvement entre la position désaccouplée et la position accouplée, et dans lequel le siège de logement (12) et/ou le dispositif de fermeture (11) sont également mobiles respectivement par rapport à la première partie (22) et à la deuxième partie (26) positionnées dans la position accouplée, entre une position en arrière dans laquelle un espace libre est présent entre le premier demi-moule (13) et le deuxième demi-moule (14), et une position en avant dans laquelle le premier demi-moule (13) et le deuxième demi-moule (14) sont accouplés.

15. Une machine de thermoformage comprenant une station de thermoformage destinée, lors de l'utilisation, à thermoformer un élément-contenant (1) qui a une paroi de fond (3) et une paroi latérale (4) raccordée au bas de la paroi de fond (3) et une bande annulaire (2) qui s'étend vers l'extérieur à partir d'une partie supérieure de la paroi latérale (4), et un appareil à activation facultative, positionné en aval de la station de thermoformage et comprenant:
une base de support (10) qui comprend à son tour un siège de logement (12) destiné, lors de l'utilisation, à loger la paroi de fond (3) et la paroi latérale (4) d'un élément-contenant (1), et un premier demi-moule (13) qui a une forme annulaire et qui entoure le siège de logement (12) et est destiné, lors de l'utilisation, à supporter la bande annulaire (2);
un dispositif de fermeture (11) positionné au-dessus de la base de support (10), le dispositif de fermeture (11) comprenant au moins un deuxième demi-moule (14) qui a une forme annulaire et qui est conformé pour correspondre au premier demi-moule (13);
au moins l'un ou l'autre de la base de support (10) ou du dispositif de fermeture (11) étant mobile par rapport à l'autre entre une position de repos dans laquelle les deux sont espacés l'un de l'autre, et une position opérationnelle dans laquelle le premier demi-moule (13) et le deuxième demi-moule (14) sont accouplés et définissent un moule annulaire destiné, lors de l'utilisation, à serrer la bande annulaire (2);
la machine étant **caractérisée en ce qu'**au moins l'un ou l'autre du premier demi-moule (13) ou du deuxième demi-moule (14) a une surface de moulage (15) qui comprend au moins une première zone annulaire (16) qui dans la position opérationnelle entoure le siège de logement (12) et une deuxième zone annulaire (17) concentrique et adjacente à la première zone annulaire (16), la première zone annulaire (16) et la deuxième zone annulaire (17) n'étant pas coplanaires; et
la base de support (10) et/ou le dispositif de fermeture (11) comprend aussi un ou plusieurs éléments de chauffage pour chauffer soit uniquement le premier demi-moule (13) soit uniquement le deuxième demi-moule (14) ou les deux pour, lors de l'utilisation, chauffer la bande annulaire (2).

16. La machine selon la revendication 15, dans laquelle la base de support (10) ou respectivement le dispositif de fermeture (11) comprennent aussi au moins un élément de coupe (24) qui est positionné concentrique à et à l'extérieur du premier demi-moule (13) ou respectivement du deuxième demi-moule (14), et qui est mobile entre une position passive dans laquelle il est rentré par rapport à un plan identifié par le premier demi-moule (13) ou respectivement par le deuxième demi-moule (14) pour, lors de l'utilisation, ne pas interférer avec la bande annulaire (2) en appui sur le premier demi-moule (13) ou respectivement sur le deuxième demi-moule (14), et une position active dans laquelle il dépasse par rapport au plan identifié par le premier demi-moule (13) ou respectivement par le deuxième demi-moule (14) pour, lors de l'utilisation, interférer avec la bande annulaire (2) en appui sur le premier demi-moule (13) ou respectivement sur le deuxième demi-moule (14).

17. La machine selon la revendication 15 ou 16, dans laquelle la base de support (10) comprend aussi un élément d'insertion et d'extraction (20) associé au siège de logement (12), au moins l'un ou l'autre du siège de logement (12) ou de l'élément d'insertion et d'extraction (20) étant mobile par rapport à l'autre entre une position d'engagement, dans laquelle l'élément d'insertion et d'extraction (20) empêche l'insertion d'un élément-contenant (1) dans le siège de logement (12), et une position de désengagement, dans laquelle l'élément d'insertion et d'extraction (20) permet l'insertion d'un élément-contenant (1) dans le siège de logement (12).
